# EUROPÄISCHE PATENTSCHRIFT

(11) **EP 1 466 108 B1**
(45) Veröffentlichungstag und Bekanntmachung des Hinweises auf die Patenterteilung: **25.04.2007**
(21) Anmeldenummer: 03729435.2
(22) Anmeldetag: 09.01.2003
(51) Int. Cl.: F16G 13/16

(54) **ENERGIEFÜHRUNGSVORRICHTUNG MIT REDUZIERTEN REIBUNGSKRÄFTEN**
ENERGY GUIDING DEVICE WITH REDUCED FRICTION FORCES
DISPOSITIF POUR ACHEMINER L'ENERGIE A FORCES DE FROTTEMENT REDUITES

(30) Priorität: 18.01.2002 FR 0200607
(43) Veröffentlichungstag der Anmeldung: 13.10.2004
(73) Patentinhaber: Kabelschlepp GmbH, 57074 Siegen (DE)
(72) Erfinder: WORMS, Jean, Jack, F-94160 Saint Mande (FR)
(74) Vertreter: Neumann, Ditmar
(86) Internationale Anmeldenummer: PCT/EP2003/000139
(87) Internationale Veröffentlichungsnummer: WO 2003/060346

(56) Entgegenhaltungen:
- EP-A- 0 725 228
- EP-A- 1 193 420
- PATENT ABSTRACTS OF JAPAN vol. 1998, no. 13, 30. November 1998 (1998-11-30) -& JP 10 220533 A (FUJI ENG KK), 21. August 1998 (1998-08-21)

## Beschreibung

Der Gegenstand der Erfindung bezieht sich auf eine Energieführungsvorrichtung, die wenigstens eine aus Gliedern zusammengesetzte Energieführungskette, die untereinander um senkrechte Achsen zur Längsrichtung der Energieführungskette angelenkt sind, aufweist.

Energieführungsketten werden in verschiedensten Apparaten, Maschinen und Einrichtungen eingesetzt, insbesondere dort, wo es erforderlich ist, Energie mittels Leitungen, Schläuche oder dergleichen von einem ortsfesten Anschluss zu einem beweglichen Anschluss eines Verbrauchers zu transportieren. Die Energieführungskette kann entweder eine einzige Kette oder mehrere Ketten umfassen, in der bzw. in denen die Leitungen, Schläuche oder dergleichen geführt werden.

Bei sehr langen Verfahrwegen besteht die Problematik, dass aufgrund des Eigengewichts der Energieführungskette sowie der Gewichte der Leitungen und Schläuche, die Energieführungskette bzw. die Kettenglieder einer hohen Beanspruchung unterliegen.

Dies ist insbesondere dann der Fall, wenn ein Obertrum der Energieführungskette auf dem Untertrum gleitet, so dass zwischen den Trumen hohe Reibungskräfte entstehen, die einerseits zu einer schnellen Abnutzung der Ketten, andererseits zu einem Bewegungswiderstand führen, wobei sich die zur Bewegung der Energieführungskette notwendige Kraft bzw. Energie erhöht und die Gefahr besteht, einen Bruch der Kette oder ihrer Befestigungspunkte hervorzurufen. Diese Problematik ist bereits erkannt worden.

So ist bekannt, dass durch Gleitschuhe, die an wenigstens einigen Gliedern der Energieführungskette angeordnet werden, der Reibungswiderstand zwischen den aneinanderreibenden Bereichen der Trume verringert werden kann.

Durch die EP 0 725 228 A1 ist eine Energieführungsvorrichtung bekannt, die wenigstens eine aus Gliedern zusammengesetzte Energieführungskette aufweist, die untereinander um senkrechte Achsen zur Längsrichtung der Energieführungskette angelenkt sind, wobei ein erstes Ende der Energieführungskette ortsfest befestigbar und das zweite Ende wenigstens in Längsrichtung bewegbar sind. Zwischen einem Obertrum sowie einem Untertrum der Energieführungskette ist ein mit Rädern versehener Transportwagen angeordnet, wobei die Räder dazu geeignet sind, gleichzeitig auf der Oberseite des Untertrums und auf der Unterseite des Obertrums zu rollen.

Für eine synchrone Bewegung des Transportwagens mit dem beweglichen Ende der Energieführungskette weist der Transportwagen an seinen gegenüberliegenden Enden jeweils eine Seilscheibe auf. Der bewegliche Anschluss, der mit dem beweglichen Ende der Energieführungskette verbunden ist, ist mit einem Seilpaar verbunden. Das eine Seil wird über die eine Seilscheibe an einem Ende und das andere Seil über eine weitere Seilscheibe am gegenüberliegenden Ende des Transportwagens geführt. Die Enden der Seile sind am ortsfesten Anschluss der Energieführungskette festgelegt.

Mit der Bewegung des beweglichen Anschlusses wird der Transportwagen durch das eine oder durch das andere Kabel bewegt.

Durch die am 3. April 2002 veröffentlichte EP 1 193 420 A1 ist eine Energieführungsvorrichtung umfassend zwei aus Gliedern zusammengesetzte Energieführungsketten bekannt, die untereinander um senkrechte Achsen zur Längsrichtung der Energieführungskette angelenkt sind, wobei die ersten Enden der Energieführungsketten ortsfest und die zweiten Enden in Längsrichtung der Energieführungskette beweglich sind. Zwischen den Obertrumen und den Untertrumen ist ein Schlitten angeordnet, der Räder aufweist. Der Schlitten wird über Seile oder Kabel bewegt, die mit dem beweglichen Anschluss eines Verbrauchers verbunden sind.

Der konstruktive Aufwand sowie der Aufwand zur Montage der Energieführungsvorrichtung, wie sie in der EP 0 725 228 A1 bzw. in der EP 1 193 420 A1 beschrieben sind, ist relativ groß. Des weiteren muss stets sichergestellt werden, dass die Seile bzw. die Kabel, die zur Bewegung des Transportwagens notwendig sind, nicht aus den Seilscheiben springen, da diese Kabel zu einer Zerstörung der Kabelführungsvorrichtung führen können.

Durch die JP 10-220533 A1 ist eine Energieführungsvorrichtung bekannt, die eine aus Gliedern zusammengesetzte Energieführungskette aufweist. Die Kette weist Kettenglieder auf, die um im Wesentlichen um senkrechte Achsen zur Längsrichtung der Energieführungskette angelenkt sind. Das erste Ende der Energieführungskette ist ortsfest befestigbar. Das zweite Ende der Energieführungskette ist wenigstens in Längsrichtung bewegbar. Zwischen dem Obertrum und dem Untertrum der Energieführungskette ist ein Mittel vorgesehen, welches mit dem Obertrum in einer Wirkverbindung steht. Die Wirkverbindung zwischen dem Obertrum und dem Untertrum wird dadurch erreicht, dass das Mittel ein Zahnrad aufweist, welches mit einer zahnstangenartig ausgebildeten unteren Kante des Obertrums der Energieführungskette zusammen wirkt.

Hiervon ausgehend liegt der vorliegenden Erfindung die Zielsetzung zugrunde, die Antriebsverluste zu verringern und insbesondere die Betriebssicherheit der Energieführungsvorrichtung zu erhöhen. Ein weiteres Ziel der Erfindung ist es, den konstruktiven Aufwand sowie den Montageaufwand zu verringern.

Diese Aufgabe bzw. Zielsetzung wird durch die Energieführungsvorrichtung gemäß Anspruch 1 gelöst bzw. erzielt. Weitere vorteilhafte Ausbildungen und Ausgestaltungen der erfindungsgemäßen Energieführungsvorrichtung sind Gegenstand der Unteransprüche.

Die erfindungsgemäße Energieführungsvorrichtung weist wenigstens eine aus Gliedern zusammengesetzte Energieführungskette auf. Die Glieder der Energieführungskette sind untereinander um senkrechte Achsen zur Längsrichtung der Energieführungskette angelenkt.

Ein erstes Ende der wenigstens einen Energieführungskette ist ortsfest befestigbar. Das zweite Ende der wenigstens einen Energieführungskette ist in Längsrichtung bewegbar.

Die Energieführungskette weist einen Obertrum sowie einen Untertrum auf, die über einen bogenförmigen Bereich, den Krümmungsbereich, miteinander verbunden sind. Die Länge des Obertrums bzw. des Untertrums ist abhängig von der Position des ortsveränderlichen zweiten Endes in Relation zu dem ortsfesten ersten Ende.

Zwischen dem Obertrum und dem Untertrum ist wenigstens ein in Längsrichtung der Energieführungskette hin und her bewegliches Mittel angeordnet. Das Mittel steht mit dem Obertrum in einer Wirkverbindung, so dass während des Bestehens der Wirkverbindung das Mittel lediglich durch den Obertrum mitbewegt wird. Vorzugsweise liegt wenigstens ein Abschnitt des Obertrums auf dem Mittel auf, so dass durch die Bewegung des Obertrums das Mittel entsprechend mitbewegt wird. Das Mittel bewegt sich hierbei mit der halben Geschwindigkeit, mit der der Obertrum bewegt wird. Bei der Wirkverbindung zwischen dem Obertrum und dem wenigstens einem Mittel handelt es sich um eine Reibverbindung.

Durch diese erfindungsgemäße Ausgestaltung der Kabelführungsvorrichtung wird eine erhöhte Betriebssicherheit erreicht, da ein passiver Antrieb des Mittels erfolgt. Der konstruktive Aufwand sowie der Montageaufwand der erfindungsgemäßen Energieführungsvorrichtung werden auf ein sehr geringes Maß reduziert.

Zwischen den beiden Energieführungsketten sind die Mittel angeordnet. Bei solch einer Konfiguration ist es nicht notwendig, dass die Mittel eine Rückholeinrichtung aufweisen. Die Mittel können jedoch wenigstens eine Rückholeinrichtung umfassen.

Zur Verringerung der Reibung und somit zur Verringerung der Antriebsverluste wird nach einer vorteilhaften Ausgestaltung der Energieführungsvorrichtung vorgeschlagen, dass das Mittel Rollelemente aufweist. Bei den Rollelementen handelt es sich bevorzugt um Räder und/oder Rollen.

Zur Vereinfachung des Aufbaus des Mittels wird vorgeschlagen, dass wenigstens zwei Rollelemente durch eine starre Achse miteinander verbunden sind. Vorzugsweise sind wenigstens die Rollelemente aus wenigstens einem Kunststoff gebildet. Sind die Rollelemente durch eine starre Achse miteinander verbunden, so können die Rollelemente und die starre Achse einstückig aus einem Kunststoff hergestellt werden. Die Herstellung erfolgt vorzugsweise nach dem Kunststoffspritzverfahren. Da die starre Achse und die Rollelemente unterschiedliche Funktionalitäten haben, kann es zweckmäßig sein, die Laufflächen der Rollelemente mit einem Belag bzw. einer Beschichtung zu versehen, der bzw. die einen geringen Reibungsbeiwert aufweist und/oder geräuscharm ist. Die Aufbringung des Belags bzw. der Beschichtung kann nach dem Zwei-Komponenten-Spritzverfahren erfolgen. Die Rollelemente können unmittelbar zwischen dem Obertrum und dem Untertrum der Energieführungskette angeordnet werden. Bevorzugt ist jedoch eine Ausgestaltung der Erfindung, bei der die Rollelemente mit wenigstens einem Träger verbunden sind. Der Träger kann aus Metall oder Kunststoff sein. Vorzugsweise ist der Träger durch wenigstens ein Profil gebildet. Die Rollelemente sind vorzugsweise lösbar mit dem Träger verbunden. Die lösbare Verbindung ist jedoch so beschaffen, dass die Rollelemente unverlierbar mit dem Träger verbunden sind.

Bevorzugt ist eine Ausbildung der erfindungsgemäßen Energieführungsvorrichtung, bei der die Rollelemente und/oder wenigstens einige Glieder so ausgebildet sind, dass diese die Ausbildung der Wirkverbindung zwischen dem wenigstens einem Mittel und der Energieführungskette förderlich sind.

Nach einer noch weiteren vorteilhaften Ausbildung der Energieführungsvorrichtung wird vorgeschlagen, dass die Mittel, insbesondere die Rollelemente, dazu geeignet sind, zumindest auf der Unterseite des Obertrums bewegt zu werden. Dies ermöglicht einen relativ kompakten Aufbau der Energieführungsvorrichtung.

Zur Vermeidung hoher lokaler Druckkräfte im Untertrum wird vorgeschlagen, dass die Mittel in wenigstens einer sich in Längsrichtung der Energieführungskette verlaufenden Führung geführt werden. Durch diese Maßnahme wird die Möglichkeit eröffnet auch Energieführungsketten zu verwenden, die Kettenlaschen aufweisen, die nur eine geringe Dicke aufweisen. Des weiteren können auch Energieführungsketten verwendet werden, die aus einem relativ weichen Kunststoff hergestellt sind.

Durch die Ausbildung einer Führung wird auch die Möglichkeit geschaffen, den Durchhang des Obertrums zu verringern, was zweckmäßig sein kann, wenn zwischen dem Obertrum und dem Untertrum Einbauten vorhanden sind.

Die Führung ist vorzugsweise durch wenigstens ein Führungsprofil gebildet. Das Führungsprofil kann unterschiedliche Geometrien aufweisen. Besonders bevorzugt ist die Ausbildung eines Führungsprofils, bei dem dieses im Querschnitt im wesentlichen L-förmig oder U-förmig ausgebildet ist. Hierdurch wird auch eine seitliche Führung der Mittel erzielt.

Nach einer noch weiteren vorteilhaften Ausbildung der Energieführungsvorrichtung wird vorgeschlagen, dass die Mittel wenigstens eine Rückholeinrichtung aufweisen, die in Kontakt mit einer Innenseite des Krümmungsbereichs der Energieführungskette bringbar ist. Durch diese Maßnahme wird erreicht, dass das Mittel der Bewegung des Obertrums folgt, obwohl die Wirkverbindung zwischen dem Mittel und dem Obertrum durch das Aufliegen wenigstens eines Abschnittes des Obertrums auf dem Mittel nicht mehr oder nur in einem geringen Maße ausgebildet ist, so dass das Mittel ohne Rückholeinrichtung der Bewegung des Obertrums nur in einem verschlechterten Ausmaß oder gar nicht mehr folgen würde. Eine solche Konstellation kann insbesondere dann eintreten, wenn bei einer einseitigen Anordnung einer Energieführungskette der bewegliche Anschluss der Energieführungskette in einer Endstellung, oder in diese Endstellung übergeht, in der die Länge des Obertrums minimal oder sogar gegen Null tendiert.

Bevorzugt ist das Mittel so ausgebildet, dass es an beiden Enden jeweils eine Rückholeinrichtung aufweist, so dass der Einbau des Mittels vereinfacht wird. Da die Rückholeinrichtungen an beiden Enden des Mittels vorgesehen sind, ist keine bevorzugte Einbaurichtung des Mittels vorhanden, was zur erhöhten Betriebssicherheit führt. Des weiteren hat die Anordnung von zwei Rückholeinrichtung den Vorteil, dass diese mit dem jeweiligen Krümmungsbereich gegenläufig angeordnete Energieführungsketten zusammenwirken können.

Weist das Mittel wenigstens eine Rückholeinrichtung auf, so wird nach einer noch weiteren vorteilhaften Ausbildung der Energieführungsvorrichtung vorgeschlagen, dass der Kontakt innerhalb eines Kontaktbereichs stattfindet, der im wesentlichen auf der gleichen Höhe liegt wie der Krümmungsmittelpunkt des Krümmungsbereiches. Diese Ausgestaltung hat den Vorteil, dass durch den Krümmungsbereich der Energieführungskette eine im wesentlichen horizontal gerichtette Kraft auf die Rückholeinrichtung ausgeübt wird, so dass störende Dreh- oder Kippmomente nur in einem geringen Ausmaß auf die Rückholeinrichtung einwirken, was zu einer erhöhten Stabilität und höhere Zuverlässigkeit des Mittels führt.

Die Rückholeinrichtung weist wenigstens einen Kontaktkörper auf. Vorzugsweise ist der Kontaktkörper wenigstens verschwenkbar, insbesondere verdrehbar gelagert.

Gemäß einer noch weiteren vorteilhaften Ausgestaltung der Energieführungsvorrichtung wird vorgeschlagen, dass diese zwei Energieführungsketten aufweist, deren jeweiligen ersten Ende benachbart zueinander sind und deren jeweiligen zweiten Enden gemeinsam beweglich sind.

Bevorzugt ist eine Ausgestaltung der Energieführungsvorrichtung, die einen Kanal, der einen Boden und zwei sich eine im wesentlichen horizontale Längsrichtung erstreckende Flanken umfasst, aufweist, in dem die wenigstens eine Energieführungskette geführt wird.

Insbesondere bei einer Energieführungsvorrichtung, die wenigstens eine einseitig verfahrbare Energieführungskette aufweist, wird vorgeschlagen, dass sich der Boden des Kanals in einem Bereich der Länge des Kanals, entgegengesetzt zu dem Untertrum des ersten Endes der Kette befindet, im wesentlichen auf demselben Niveau wie die Oberseite des Untertrums befindet, mit dieser Ausgestaltung wird eine im wesentlichen kontinuierliche Bahn für die Mittel gebildet.

Vorzugsweise weist der Kanal die Führung für die Mittel auf. Die Führung ist insbesondere durch die Flanken gebildet. Insbesondere wird vorgeschlagen, dass die Flanken entsprechend ausgeformt sind. Die Flanken werden durch Zusammensetzen von Profilen mit endlicher Länge gebildet. Sie können beispielsweise durch entsprechende Umbiegungen von Blechteilen hergestellt sein.

Weitere Einzelheiten und Vorteile der erfindungsgemäßen Energieführungsvorrichtung werden anhand der in der Zeichnung dargestellten Ausführungsbeispiele erläutert, ohne dass der Gegenstand der Erfindung auf diese bevorzugten Ausführungsbeispiele beschränkt wird.

Es zeigen:
- Fig. 1: In schematischer Ansicht im Längsschnitt eine Energieführungsvorrichtung mit einer einzigen Kette in einer Endposition der Energieführungskette,
- Fig. 2: Die Energieführungsvorrichtung nach Fig. 1 in einer zweiten Endstellung der Energieführungskette,
- Fig. 3: eine Schnittansicht entlang der Schnittlinie III-III in der Fig. 1,
- Fig. 4: eine Schnittansicht entlang der Schnittlinie IV-IV nach Fig. 2,
- Fig. 5: eine schematische Teilansicht im Längsschnitt einer erfindungsgemäßen Energieführungsvorrichtung mit zwei Energieführungsketten,
- Fig. 6: ein zweites Ausführungsbeispiel einer Energieführungsvorrichtung in einer Vorderansicht,
- Fig. 7: die Energieführungsvorrichtung nach Fig. 6 in einer Seitenansicht und in einer ersten Endstellung,
- Fig. 8: die Energieführungsvorrichtung nach Fig. 6 in Seitenansicht und in einer zweiten Endstellung,
- Fig. 9: eine Energieführungsvorrichtung mit einer Rückholeinrichtung,
- Fig. 10: in einer Vorderansicht ein weiteres Ausführungsbeispiel einer Energieführungsvorrichtung,
- Fig. 11: einen Träger mit Rollelementen,
- Fig. 12: ein erstes Ausführungsbeispiel eines Profils eines Trägers und
- Fig. 13: ein zweites Ausführungsbeispiel eines Profils eines Trägers.

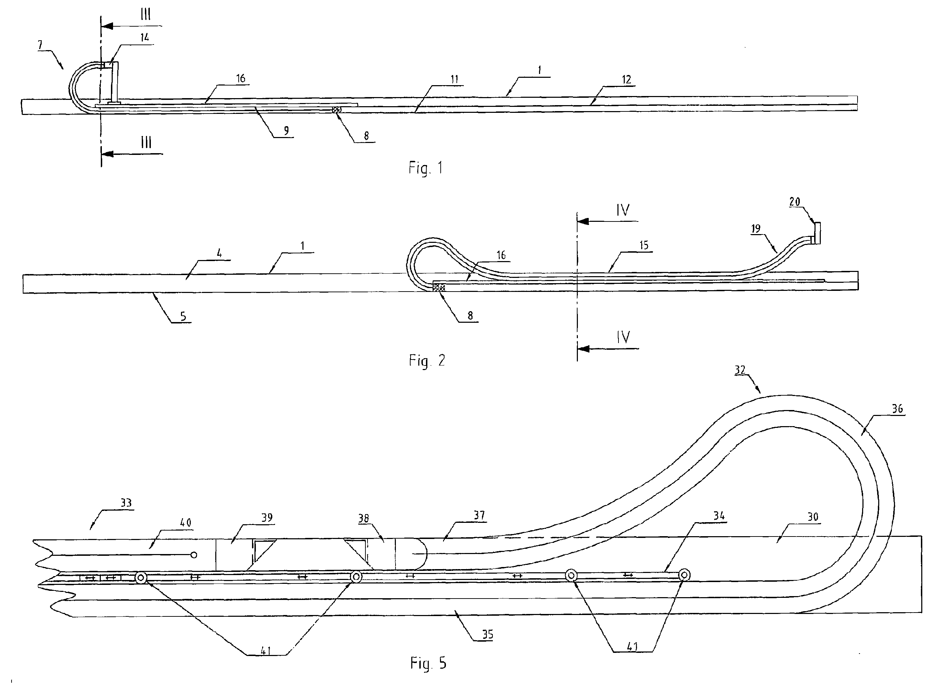

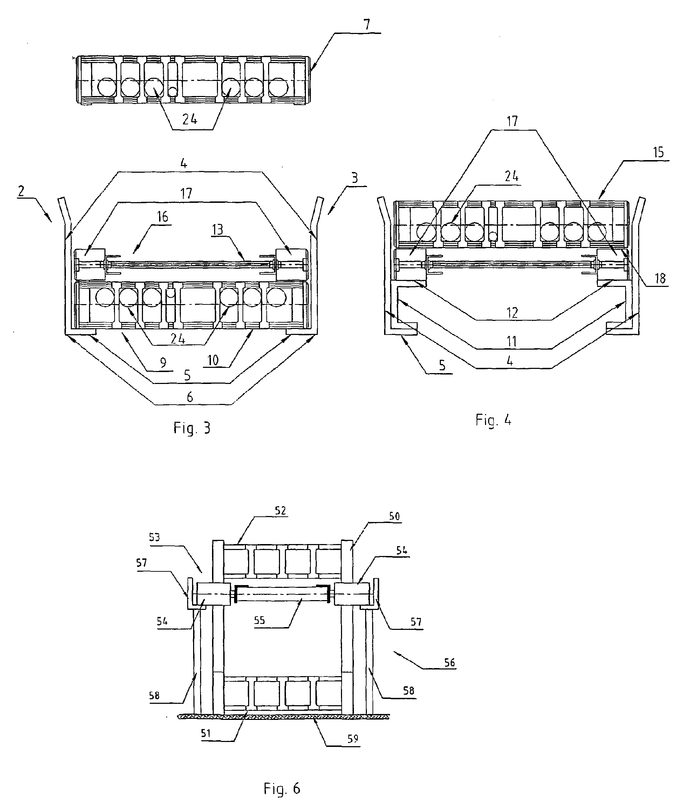

Die in den Figuren 1 bis 4 dargestellte erfindungsgemäße Energieführungsvorrichtung weist einen sich horizontal erstreckenden Kanal 1 auf, der durch zwei Seitenprofile 2 und 3 gebildet ist, Die Seitenprofile 2 und 3 sind in dem dargestellten Ausführungsbeispiel symmetrisch ausgebildet. Jedes Profil 2 und 3 weisen einen transversalen L-förmigen Abschnitt auf, und definieren jeder eine vertikale Flanke 4 und eine horizontale Krempe 5, die sich zur Krempe 5 der gegenüberliegenden Flanke 4 hin von der unteren Kante 6 der Flanke 4 aus erstrecken.
Die Energieführungskette 7 ist mit einem ihrer Enden, mit 8 bezeichnet, an den Profilen 2 und 3 im wesentliche auf halbe Länge der letzteren befestigt, sodass ein Bereich 9 (Untertrum) ihrer Länge, und zum Ende 8, seiner Unterseite 10, wie dies in den Figuren 1 und 3 dargestellt ist, auf den den Boden eines Kanals definierenden Krempen 5 zwischen dem Ende 8 und dem linken Ende nach Figur 1 ruhen kann.

Wie aus der Figur 4 ersichtlich ist, weist der Kanal zusätzliche Profile 11 auf, die oberhalb der Krempen 5 angeordnet sind. Sie bilden einen hochliegenden Boden 12 des Kanals 1, der auf dem gleichen Niveau wie die Oberseite 13 des Untertrums 9 der Energieführungskette 7 liegt.

In der Figur 1 befindet sich das bewegliche Ende 14 der Energieführungskette 7, das entgegengesetzt zum ortsfesten Ende 8 ist, in seiner einen linksgelegenen Endstellung, und die Länge des horizontal auf den Krempen 5 ruhenden Untertrums 9 ist maximal.

Ausgehend von dieser Stellung kann sich das Ende 14 nach rechts in Längsrichtung des Kanals 1 bis in die in der Figur 2 dargestellte zweite Endstellung bewegen, in der der Untertrum 9 eine minimale Erstreckung aufweist, bzw. in Abhängigkeit von der Konstruktion völlig verschwunden ist, wobei die Energieführungskette bezüglich der Krempen 5 ganz hochgehoben ist.

Im Laufe dieser Bewegung kommt ein Obertrum 15 mit variabler Länge der Energieführungskette, der benachbart zum beweglichen Ende 14 ist, unter der Wirkung seines eigenen Gewichts zur Anlage auf den Untertrum und dann auf den hochliegenden Boden 12.

Erfindungsgemäß liegt der Obertrum 15 auf dem Untertrum 9 und/oder auf dem hochliegenden Boden 12 unter Mitwirkung des Mittels 16 auf, das einen sich in Längsrichtung erstreckenden starren Träger aufweist. An dem Träger sind Räder 17 so montiert, dass sie sich um horizontale Achsen drehen, die senkrecht zur Längsrichtung der Energieführungskette verlaufen und demzufolge parallel zu den Gelenkachsen der Glieder, die nicht individuell dargestellt sind, der Energieführungskette 7.

Die Räder 17 können einerseits auf der Oberseite 13 des Untertrums 9 der Energieführungskette und/oder auf dem hochliegenden Boden 12, andererseits auf der Unterseite 18 des Obertrums 15 rollen, wobei sie das Mittel 16 in einer Längsbewegung bei gleichmäßiger Geschwindigkeit mit der Hälfte der Geschwindigkeit der Bewegung des beweglichen Endes 14 der Energieführungskette 7 antreiben.

In dem dargestellten Ausführungsbeispiel sind die Räder 17 paarweise montiert, wobei sie eine gemeinsame Rotationsachse haben und die Räder 17 eines Paares jeweils benachbart zu den beiden Flanken des Kanals sind, um eine seitliche Führung des Schlittens zwischen den Flanken zu schaffen. Die Länge des Mittels entspricht etwa der Hälfte der Länge des Kanals 1 und liegt etwas unterhalb zu der Energieführungskette, so dass die gesamte Länge des Obertrums 15 in allen Stellungen der Energieführungskette aufgenommen wird. Das Mittel befindet sich dann im wesentlichen der linken Hälfte der Länge der Figur 1, und in ihrer rechten Hälfte in der Figur 2.

In den Figuren 3 und 4 sind schematisch Kabel, Leitungen oder dergleichen 24 dargestellt, die in an und für sich bekannter Weise in den Gliedern der Energieführungskette 7 geformte Aufnahmen durchqueren, entlang der Energieführungskette 7 von einem zur anderen ihrer Enden 8, 14 geführt zu werden.

Figur 5 zeigt ein zweites Ausführungsbeispiel der erfindungsgemäßen Energieführungsvorrichtung. Die Energieführungsvorrichtung weist zwei Energieführungsketten 32, 33 auf, die in einer gegenüberliegenden Anordnung sind. Die Vorrichtung weist einen Kanal 30 auf Der Kanal 30 entspricht hinsichtlich seiner Ausgestaltung im wesentlichen dem Kanal 1, wobei der Kanal 30 keine zusätzlichen, einen hochliegenden Boden bildenden Profile aufweist. Die Energieführungsvorrichtung weist Mittel 34 auf

In bekannter Weise wird ein nicht dargestelltes Ende jeder Kette 32, 33 in dem Kanal 30 im wesentlichen auf halber Länge von diesem fixiert. Ein Untertrum der Energieführungskette 32 erstreckt sich horizontal nach rechts in der Figur 5, wobei seine Unterseite auf dem horizontalen Boden des Kanals ruht. Am rechten Ende des Untertrums 35 krümmt sich die Energieführungskette 32 nach oben und danach nach links in einen Krümmungsbereich 36, bevor sie der Obertrum bis zu einer horizontalen Bereich 37 bewegt, der benachbart zu ihrem zweiten Ende 38 ist.

Die Energieführungskette 32 folgt einem Verlauf, der analog zu dem der Energieführungskette 32 ist, jedoch in entgegengesetzter Richtung gerichtet ist, wobei einzig sein beweglichstes Ende 39 und ein Teil des Obertrums 40 in der Figur 5 dargestellt sind. Die beweglichen Enden 30 und 39 der beiden Energieführungsketten sind gemeinsam in Längsrichtung der Energieführungsvorrichtung bewegbar.

In der, in der Figur 5, dargestellten Position, befinden sich die Enden 38 und 39 in Nachbarschaft zum rechten Ende des Kanals 30 und des Krümmungsbereichs 36 und über dem horizontalen unteren Bereich 35 der Energieführungskette 33.

Wenn sich die Enden 30 und 39 nach links in der Figur 5 bewegen, bewegt sich auch der entsprechende Krümmungsbereich 36 der Kette 33 ebenfalls nach links. Der Untertrum 35 und der Obertrum 40 werden kürzer, während der Obertrum 37 und der nicht dargestellte Untertrum der Kette 33 länger werden.

Mit dem Bezugszeichen 34 ist ein Mittel bezeichnet, dessen Räder 41 auf den Oberseiten der Untertrume der Energieführungsketten 32, 33 und auf den Unterseiten der Obertrume 37 und 40 rollen. Hierbei liegen in allen Stellungen die Energieführungsketten auf dem Mittel 34. Der Obertrum 37 und/oder der Untertrum 40 liegen stets auf dem Mittel 34 auf einer Länge auf, die ausreichend ist, um eine Bewegungen direkt auf das Mittel zu übertragen.

Beim Vergleich der Figuren 1 und 2 mit der Figur 5 ist zu sehen, dass sich im ersten Fall das bewegliche Ende 14 der Energieführungskette auf höherem Niveau als der Obertrum befindet und an diesen durch einen absteigenden Bereich 19 angeschlossen ist, während sich die Enden 38 und 39 auf demselben Niveau wie die Obertrumme 37 und 40 und jeweils benachbart zu diesen befinden. Es ist auch möglich, den Obertrum einer einzigen Kette auf dem Niveau des Obertrums zu positionieren und die beweglichen Enden von zwei Ketten auf einem höheren Niveau einem verkürzten Arm 20 zu positionieren.

Fig. 6 zeigt ein weiteres Ausführungsbeispiel der erfindungsgemäßen Energieführungsvorrichtung. Die Energieführungsvorrichtung weist eine Energieführungskette 50 auf. Die Energieführungskette weist einen Untertrum 51 und einen Obertrum 52 auf. Zwischen dem Obertrum 52 und dem Untertrum 51 ist ein Mittel 53 angeordnet, welches in Längsrichtung der Energieführungskette 50 hin und her bewegbar ist. Das Mittel 53 steht mit dem Obertrum 52 in einer Wirkverbindung, so dass während des Bestehens der Wirkverbindung das Mittel 53 lediglich durch den Obertrum 52 mitbewegt wird.

Das Mittel 53 weist Rollelemente 54 auf, die mit einem Träger 55 verbunden sind. Die Verbindung der Rollelemente 54 mit dem Träger 55 ist derart, dass die Rollelemente frei verdrehbar sind.

Wie aus der Darstellung in der Figur 6 ersichtlich ist, ist das Mittel 53 in einer sich in Längsrichtung der Energieführungskette verlaufenden Führung 56 geführt. Die Führung 56 ist gebildet durch Führungsprofile 57. In dem dargestellten Ausführungsbeispiel sind die Führungsprofile L-förmig ausgebildet. Die Führungsprofile können auch andere Gestalt oder Form aufweisen. Es kann sich hierbei um U-förmige Führungsprofile handeln. Das L-förmige Führungsprofil hat den Vorzug, dass auch eine seitliche Führung des Mittels gewährleistet wird.

Die Führungsprofile sind über Stützstege 58 mit einer Auflage 59 verbunden. Bei den Stützstegen 58 handelt es sich vorzugsweise um Profile. Statt der Stützstege 58 können, sofern vorhanden, die Führungsprofile 57 unmittelbar auch an Wände befestigt werden. Es ist auch möglich, beispielsweise Dreiecksschenkel vorzusehen, auf denen die Führungsprofile aufliegen. Ein solcher Dreiecksschenkel kann dann beispielsweise mit einer vertikal verlaufenden Wand verbunden sein.

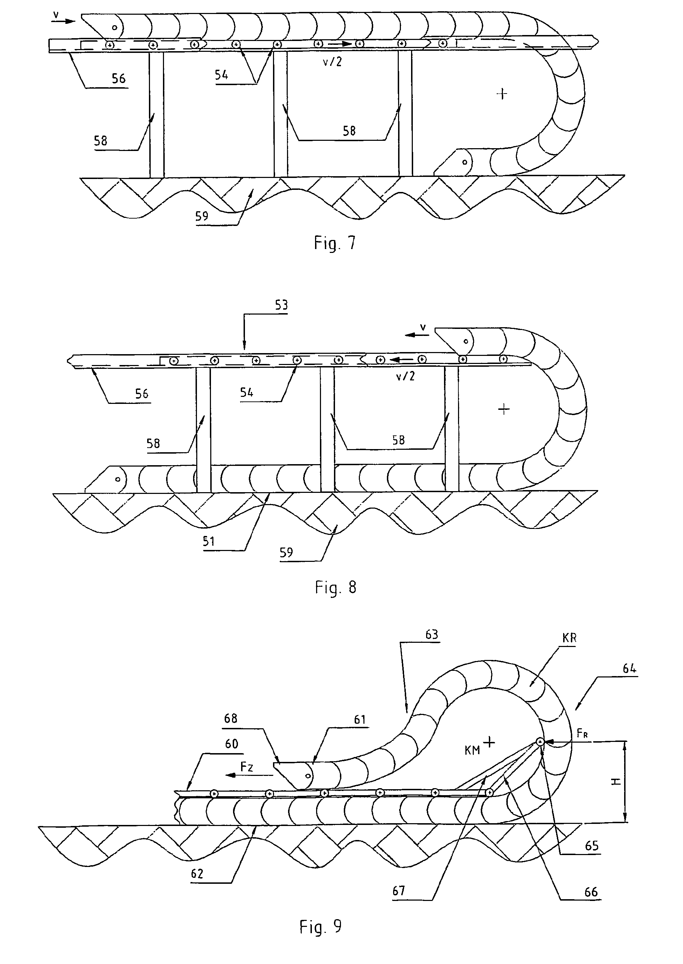

In den Fig. 7 und 8 ist die erfindungsgemäße Energieführungskette 50 nach Fig. 6 in einer Seitenansicht dargestellt. In der Darstellung nach Fig. 7 hat die Energieführungskette eine erste Endstellung eingenommen. In der Darstellung nach Fig. 8 hat die Energieführungskette die zweite Endstellung eingenommen, in der der Obertrum eine minimale Erstreckung hat. Während der Bewegung der Energieführungskette mit der Geschwindigkeit v bewegt sich das Mittel 53 mit der halben Geschwindigkeit der Energieführungskette.

Fig. 9 zeigt ein Mittel 60, welches zwischen einem Obertrum 61 und einem Untertrum 62 einer Energieführungskette 63 angeordnet ist. Der Untertrum 62 geht in einen Krümmungsbereich 64 über. Der Krümmungsbereich 64 hat einen Krümmungsradius KR.

Das Mittel 60 weist eine Rückholeinrichtung 65 auf. Die Rückholeinrichtung 65 ist mit einer Innenseite des Krümmungsbereichs 64 in Kontakt.

Die Rückholeinrichtung 65 weist einen Kontaktkörper 66 auf, der mindestens verschwenkbar, vorzugsweise verdrehbar ist. Bei dem Kontaktkörper 66 handelt es sich vorzugsweise um wenigstens eine Rolle. Diese ist über Streben 67 mit dem Mittel 60 verbunden. Statt zweier Streben 67 kann auch eine einzige Strebe vorgesehen sein.

Der Kontaktkörper 66 ist derart angeordnet, dass der Kontakt zwischen ihm und dem Krümmungsbereich 64 im wesentlichen auf der gleichen Höhe H stattfindet, wobei auch der Krümmungsmittelpunkt KM auf gleicher Höhe H liegt. Der Kontaktkörper kann auch oberhalb des Krümmungsmittelpunktes liegen, bei solch einer Ausbildung der Rückholeinrichtung gleitet die Energieführungskette über den Kontaktkörper und legt sich auf dem Mittel ab.

Wird auf das bewegliche Ende 68 der Energieführungskette eine Kraft F_{Z} in Richtung des ortsfesten Anschlusses, welcher nicht dargestellt ist in der Fig. 9, ausgeübt, so wird durch den Krümmungsbereich 64 auf den Kontaktkörper 65 eine im wesentlichen horizontal verlaufende Kraft F_{R} ausgeübt. Durch diese Kraft wird das Mittel 60 in Richtung des ortsfesten Anschlusses bewegt.

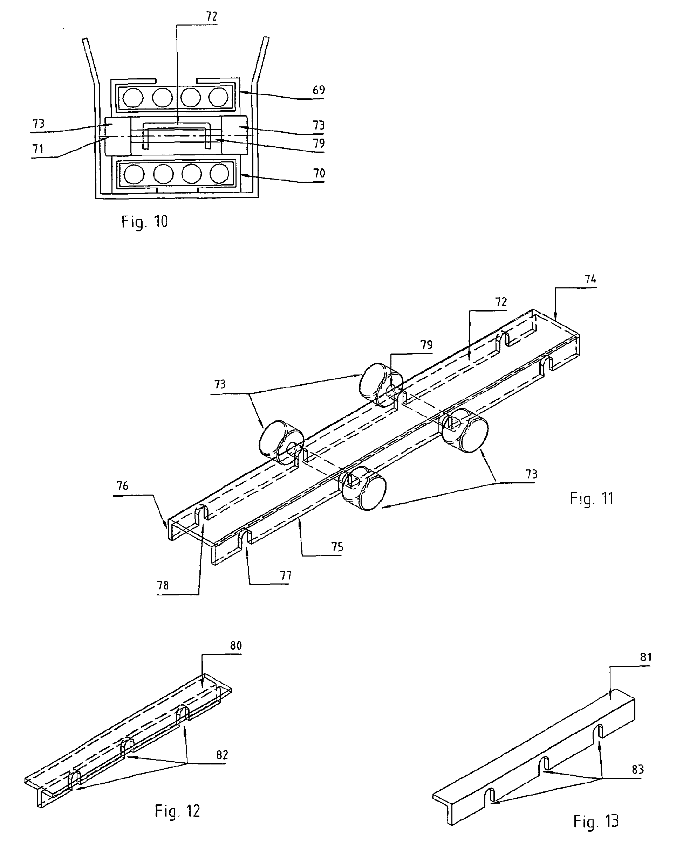

In der Fig. 10 ist ein weiteres Ausführungsbeispiel einer erfindungsgemäßen Energieführungsvorrichtung dargestellt. Die Energieführungsvorrichtung nach Fig. 10 weist im wesentlichen den gleichen Aufbau, wie die Vorrichtung nach Fig. 1 auf. Zwischen dem Obertrum 69 und dem Untertrum 70 ist ein Mittel 71 angeordnet. Das Mittel 71 weist einen Träger 72 auf, der mit Rollelementen 73 verbunden ist.

In der Fig. 11 ist das Mittel 71 dargestellt. Der Träger 72 ist in Form eines U-förmigen Profils ausgebildet. Die Basis 74 ist benachbart zu dem Obertrum 69. Von der Basis 74 erstrecken sich in Richtung des Untertrums 70 Schenkel 75, 76. In den Schenkeln 75, 76 sind Aussparungen 77, 78 ausgebildet, in die jeweils eine Achse 79 eingreift, die mit den Rollelementen 73 verbunden ist. Die Anzahl und die Anordnung der Rollelemente 73 kann nach Bedarf gewählt werden. In dem dargestellten Ausführungsbeispiel sind die Rollelemente 73 im wesentlichen zylinderförmig ausgebildet. Die Rollelemente 73 sowie die Achse 79 können einstückig ausgebildet sein. Insbesondere sind Rollelemente 73 und Achse 79 aus einem Kunststoff hergestellt.

In den Fig. 12 und 13 sind Profile 80, 81 dargestellt, die Teile eines Trägers bilden können. Das Profil 80 ist T-förmig ausgebildet, während das Profil 81 L-förmig ausgebildet ist. Jedes Profil 80, 81 weist Aussparungen 82 bzw. 83 zur Aufnahme einer Achse eines Rollelementes auf.

### Bezugszeichenliste

- 1: Kanal
- 2, 3: Seitenprofile
- 4: vertikale Flanke
- 5: horizontale Krempe
- 6: untere Kante
- 7: Energieführungskette
- 8: freies Ende
- 9: Bereich
- 10: Unterseite
- 11: Profil
- 12: hochliegender Boden
- 13: Oberseite
- 14: bewegliches Ende
- 15: Obertrum
- 16: Mittel
- 17: Räder
- 18: Unterseite
- 20: Arm
- 24: Kabel, Leitungen oder dergleichen
- 30: Kanal
- 32, 33: Energieführungskette
- 34: Mittel
- 35: Untertrum
- 36: Krümmungsbereich
- 37: horizontaler Bereich
- 38: zweites Ende
- 39: bewegliches Ende
- 40: Obertrum
- 41: Räder
- 50: Energieführungskette
- 51: Untertrum
- 52: Obertrum
- 53: Mittel
- 54: Rollelement
- 55: Träger
- 56: Führung
- 57: Führungsprofil
- 58: Stützsteg
- 59: Auflage
- 60: Mittel
- 61: Obertrum
- 62: Untertrum
- 63: Kette
- 64: Krümmungsbereich
- 65: Rückholeinrichtung
- 66: Kontaktkörper
- 67: Strebe
- 68: beweglicher Anschluss
- 69: Obertrum
- 70: Untertrum
- 71: Mittel
- 72: Träger
- 73: Rollelement
- 74: Basis
- 75, 76: Schenkel
- 77, 78: Aussparung
- 79: Achse
- 80, 81: Profil
- 82, 83: Aussparung

## Patentansprüche

1. Energieführungsvorrichtung, umfassend wenigstens eine aus Gliedern zusammengesetzte Energieführungskette (7), die untereinander um senkrechte Achsen zur Längsrichtung der Energieführungskette (7) angelenkt sind, wobei ein erstes Ende (8) der Energieführungskette (7) ortsfest befestigbar und das zweite Ende (14) wenigstens in Längsrichtung bewegbar sind, und ein Obertrum (15) sowie einen Untertrum (9) aufweist, zwischen denen wenigstens ein in Längsrichtung der Energieführungskette (7) hin und her bewegliche Mittel (16) angeordnet ist, wobei das Mittel (16, 34, 53, 71) mit dem Obertrum (15) in einer Wirkverbindung steht, so dass während des Bestehens der Wirkverbindung das Mittel (16, 34, 53, 71) lediglich durch den Obertrum (15) mitbewegt wird,
**dadurch gekennzeichnet, dass** die Wirkverbindung eine Reibverbindung ist.

2. Energieführungsvorrichtung nach Anspruch 1, **dadurch gekennzeichnet, dass** Mittel (16, 34, 53, 71) Rollelemente (54, 73) aufweist.

3. Energieführungsvorrichtung nach Anspruch 2, **dadurch gekennzeichnet, dass** die Rollelemente Räder (17) umfassen.

4. Energieführungsvorrichtung nach Anspruch 2 oder 3, **dadurch gekennzeichnet, dass** die Rollelemente Rollen umfassen.

5. Energieführungsvorrichtung nach Anspruch 2, 3, oder 4, **dadurch gekennzeichnet, dass** wenigstens zwei Rollelemente (73) durch eine starre Achse (79) miteinander verbunden sind.

6. Energieführungsvorrichtung nach einem der Ansprüche 2 bis 5, **dadurch gekennzeichnet, dass** wenigstens die Rollelemente (17, 54, 73) aus wenigstens einem Kunststoff gebildet sind.

7. Energieführungsvorrichtung nach einem der Ansprüche 2 bis 6, **dadurch gekennzeichnet, dass** die Rollelemente (17, 54, 73) mit wenigstens einem Träger (55, 72) verbunden sind.

8. Energieführungsvorrichtung nach Anspruch 7, **dadurch gekennzeichnet, dass** der wenigstens ein Träger (55, 72) durch wenigstens ein Profil (80, 81) gebildet ist.

9. Energieführungsvorrichtung nach einem der Ansprüche 1 bis 8, **dadurch gekennzeichnet, dass** die Rollelemente (17, 54, 73) und/oder wenigstens einige Glieder Elemente zur Ausbildung der Wirkverbindung aufweisen.

10. Energieführungsvorrichtung nach einem der Ansprüche 1 bis 9, **dadurch gekennzeichnet, dass** die Mittel (16, 34, 53, 71) insbesondere die Rollelemente (17, 54, 73) dazu geeignet sind, zumindest auf der Unterseite (18) des Obertrums (15) bewegt zu werden.

11. Energieführungsvorrichtung nach einem der Ansprüche 1 bis 9, **dadurch gekennzeichnet, dass** die Mittel (16, 34, 53, 60, 71) in wenigstens einer sich in Längsrichtung der Energieführungskette verlaufender Führung (56) geführt werden.

12. Energieführungsvorrichtung nach Anspruch 11, **dadurch gekennzeichnet, dass** die Führung (56) durch wenigstens ein Führungsprofil (57) gebildet ist.

13. Energieführungsvorrichtung nach Anspruch 12, **dadurch gekennzeichnet, dass** das Führungsprofil (57) im Querschnitt im wesentlichen L-förmig oder U-förmig ausgebildet ist.

14. Energieführungsvorrichtung nach einem der Ansprüche 1 bis 13, **dadurch gekennzeichnet, dass** die Mittel (60) wenigstens eine Rückholeinrichtung (65) aufweisen, die in Kontakt mit einer Innenseite des Krümmungsbereichs (64) der Energieführungskette bringbar ist.

15. Energieführungsvorrichtung nach Anspruch 14, **dadurch gekennzeichnet, dass** der Kontakt innerhalb eines Kontaktbereichs stattfindet, der im wesentlichen auf der gleichen Höhe (H) liegt wie der Krümmungsmittelpunkt (KM) des Krümmungsbereichs (64).

16. Energieführungsvorrichtung nach Anspruch 14 oder 15, **dadurch gekennzeichnet, dass** die Rückholeinrichtung (65) wenigstens einen, vorzugsweise mindestens verschwenkbaren, Kontaktkörper (66) aufweist.

17. Energieführungsvorrichtung nach einem der Ansprüche 1 bis 16, **gekennzeichnet durch** zwei Energieführungsketten (32, 33), deren jeweiligen ersten Enden benachbart zueinander benachbart sind und deren jeweiligen zweiten Enden (38, 39) gemeinsam beweglich sind, wobei die Mittel (34) zwischen den beiden Energieführungsketten (32, 33) angeordnet sind.

18. Energieführungsvorrichtung nach wenigstens einem der Ansprüche 1 bis 17, **dadurch gekennzeichnet, dass** diese einen Kanal (1), der einen Boden (5) und zwei sich in eine im wesentlichen horizontale Längsrichtung erstreckende Flanken (4) umfasst, aufweist.

19. Energieführungsvorrichtung nach Anspruch 18, **dadurch gekennzeichnet, dass** der Kanal (1) die Führung für die Mittel (34) aufweist.

20. Energieführungsvorrichtung nach Anspruch 19, **dadurch gekennzeichnet, dass**, in einem Bereich der Länge des Kanals (1), der sich entgegengesetzt zu dem Untetrum (9) bezüglich des ersten Endes (8) der Energieführungskette befindet, sich der Boden (15) des Kanals im wesentlichen auf gleichem Niveau wie die Oberseite (13) des Untertrums befindet, um die Führung zu bilden.

21. Energieführungsvorrichtung nach Anspruch 19 oder 20, **dadurch gekennzeichnet, dass** die Führung durch die Flanken (4) gebildet ist.

## Claims

1. Power conducting device, comprising at least one power conducting chain (7) composed of links which are linked among each other around vertical axes to the longitudinal direction of the power conducting chain (7), wherein a first end (8) of the power conducting chain (7) can be attached to a fixed location and the second end (14) can be moved at least in the longitudinal direction, and having a top run (15) as well as a bottom run (9) between which is arranged at least one means (16) movable back and forth in the longitudinal direction of the power conducting chain (7), wherein the means (16, 34, 53, 71) has an effective connection with the top run (15), so that during the existence of the effective connection the means (16, 34, 53,71) is moved along solely by the top run (15), **characterized in that** the effective connection is a frictional connection.

2. Power conducting device according to claim 1, **characterized in that** the means (16, 34, 53, 71) has rolling elements (54, 73).

3. Power conducting device according to claim 2, **characterized in that** the rolling elements comprise wheels (17).

4. Power conducting device according to claim 2 or 3, **characterized in that** the rolling elements comprise rollers.

5. Power conducting device according to claim 2, 3 or 4, **characterized in that** at least two rolling elements (73) are joined together by a rigid axis (79).

6. Power conducting device according to any one of claims 2 to 5, **characterized in that** at least the rolling elements (17, 54, 73) are made of at least one plastic material.

7. Power conducting device according to any one of claims 2 to 6, **characterized in that** the rolling elements (17, 54, 73) are connected to at least one carrier (55, 72).

8. Power conducting device according to claim 7, **characterized in that** the at least one carrier (55, 72) is formed by at least one profile (80, 81).

9. Power conducting device according to any one of claims 1 to 8, **characterized in that** the rolling elements (17, 54, 73) and/or at least some links have elements for forming the effective connection.

10. Power conducting device according to any one of claims 1 to 9, **characterized in that** the means (16, 34, 53, 71), especially the rolling elements (17, 54, 73), are adapted to be moved at least on the bottom side (18) of the top run (15).

11. Power conducting device according to any one of claims 1 to 9, **characterized in that** the means (16, 34, 53, 60, 71) are guided in at least one guide (56) running longitudinally to the power conducting chain.

12. Power conducting device according to claim 11, **characterized in that** the guide (56) is formed by at least one guiding profile (57).

13. Power conducting device according to claim 12, **characterized in that** the cross-section of the guiding profile (57) is substantially L-shaped or U-shaped.

14. Power conducting device according to any one of claims 1 to 13, **characterized in that** the means (60) have at least one return device (65), which can be brought in contact with an inner side of the curvature area (64) of the power conducting chain.

15. Power conducting device according to claim 14, **characterized in that** the contact occurs within a contact area, which is substantially at the same height (H) as the center of the curvature area (KM) of the curvature area (64).

16. Power conducting device according to claim 14 or 15, **characterized in that** the return device (65) has at least one, preferably at least tiltable contact body (66).

17. Power conducting device according to anyone of claims 1 to 16, **characterized by** two power conducting chains (32, 33), whose respective one ends are adjacent to one another and whose respective second ends (38, 39) can be moved together, wherein the means (34) are arranged between the two power conducting chains (32, 33).

18. Power conducting device according to at least one of claims 1 to 17, **characterized in that** it has a channel (1) that comprises a floor (5) and two flanks (4), the channel extending in a substantially horizontal longitudinal direction.

19. Power conducting device according to claim 18, **characterized in that** the channel (1) has the guide for the means (34).

20. Power conducting device according to claim 19, **characterized in that** in a region of the length of the channel (1), that is opposite to the bottom run (9) regarding the first end (8) of the power conducting device, the floor (15) of the channel is substantially at the same level as the upper side (13) of the bottom run, thereby creating the guide.

21. Power conducting device according to claim 19 or 20, **characterized in that** the guide is formed by the flanks (4).

## Revendications

1. Dispositif de guidage d'énergie comportant au moins une chaîne de guidage d'énergie (7) composée de maillons qui sont articulés entre eux suivant des axes perpendiculaires par rapport à la direction longitudinale de la chaîne de guidage d'énergie (7), dans lequel une première extrémité (8) de la chaîne de guidage d'énergie (7) peut être fixée de manière stationnaire et la deuxième extrémité (14) est amovible au moins dans la direction longitudinale, et présente un brin supérieur (15) ainsi qu'un brin inférieur (9), entre lesquels au moins un moyen amovible (16) se déplaçant en va-et-vient en direction longitudinale de la chaîne de guidage d'énergie (7), est agencé, le moyen (16, 34, 53, 71) se trouvant dans une liaison effective avec le brin supérieur (15), de sorte que durant l'existence de la liaison effective le moyen (16, 34, 53, 71) est déplacé uniquement par le brin supérieur (15), **caractérisé en ce que** la liaison effective est une liaison par friction.

2. Dispositif de guidage d'énergie selon la revendication 1, **caractérisé en ce que** le moyen (16, 34, 53, 71) a des éléments roulants (54, 73).

3. Dispositif de guidage d'énergie selon la revendication 2, **caractérisé en ce que** les éléments roulants comportent des roues (17).

4. Dispositif de guidage d'énergie selon la revendication 2 ou 3, **caractérisé en ce que** les éléments roulants comportent des rouleaux.

5. Dispositif de guidage d'énergie selon la revendication 2, 3 ou 4, **caractérisé en ce qu'**au moins deux éléments roulants (73) sont liés réciproquement par un axe (79) rigide.

6. Dispositif de guidage d'énergie selon l'une quelconque des revendications 2 à 5, **caractérisé en ce qu'**au moins les éléments roulants (17, 54, 73) sont formés d'au moins une matière plastique.

7. Dispositif de guidage d'énergie selon l'une quelconque des revendications 2 à 6, **caractérisé en ce que** les éléments roulants (17, 54, 73) sont reliés à au moins un support (55, 72).

8. Dispositif de guidage d'énergie selon la revendication 7, **caractérisé en ce qu'**au moins un support (55, 72) est formé par au moins un profilé (80, 81).

9. Dispositif de guidage d'énergie selon l'une quelconque des revendications 1 à 8, **caractérisé en ce que** les éléments roulants (17, 54, 73) et/ou au moins plusieurs maillons ont des éléments pour la formation de la liaison effective.

10. Dispositif de guidage d'énergie selon l'une quelconque des revendications 1 à 9, **caractérisé en ce que** les moyens (16, 34, 53, 71), notamment les éléments roulants (17, 54, 73), sont appropriés à être déplacés au moins sur la face inférieure (18) du brin supérieur (15).

11. Dispositif de guidage d'énergie selon l'une quelconque des revendications 1 à 9, **caractérisé en ce que** les moyens (16, 34, 53, 60, 71) sont guidés dans au moins un guide (56) s'étendant en direction longitudinale de la chaîne de guidage d'énergie.

12. Dispositif de guidage d'énergie selon la revendication 11, **caractérisé en ce que** le guide (56) est formé par au moins un profilé de guidage (57).

13. Dispositif de guidage d'énergie selon la revendication 12, **caractérisé en ce qu'**en section transversale le profilé de guidage (57) est sensiblement en forme de L ou de U.

14. Dispositif de guidage d'énergie selon l'une des revendications 1 à 13, **caractérisé en ce que** les moyens (60) ont au moins un dispositif de rappel (65) qui peut être mis en contact avec une face intérieure de la région de courbure (64) de la chaîne de guidage d'énergie.

15. Dispositif de guidage d'énergie selon la revendication 14, **caractérisé en ce que** le contact a lieu à l'intérieur d'une région de contact, qui se trouve sensiblement sur la même hauteur (H) que le centre de courbure (KM) de la région de courbure (64).

16. Dispositif de guidage d'énergie selon la revendication 14 ou 15, **caractérisé en ce que** le dispositif de rappel (65) a au moins un corps de contact (66), de préférence un corps de contact qui peut au moins être pivoté.

17. Dispositif de guidage d'énergie selon l'une des revendications 1 à 16, **caractérisé par** deux chaînes de guidage d'énergie (32, 33), dont les premières extrémités (38, 39) respectives sont adjacentes et dont les deuxièmes extrémités (38, 39) respectives son amovibles communément, les moyens (34) étant agencés entre les deux chaînes de guidage d'énergie (32, 33).

18. Dispositif de guidage d'énergie selon au moins une des revendications 1 à 17, **caractérisé en ce que** celui-ci a un canal (1) qui comporte un fond (5) et deux flancs (4) s'étendant dans une direction longitudinale sensiblement horizontale.

19. Dispositif de guidage d'énergie selon la revendication 18, **caractérisé en ce que** le canal (1) a le guide pour les moyens (34).

20. Dispositif de guidage d'énergie selon la revendication 19, **caractérisé en ce que** dans une région de la longueur du canal (1) qui est située en vis-à-vis du brin inférieur (9) par rapport de la première extrémité (8) de la chaîne de guidage d'énergie, le fond (15) du canal se trouve sensiblement sur le même niveau que la face supérieure (13) du brin inférieur pour former le guide.

21. Dispositif de guidage d'énergie selon la revendication 19 ou 20, **caractérisé en ce que** le guide est formé par les flancs (4).
